(19) **Europäisches Patentamt**

**European Patent Office**

**Office européen des brevets**

(11) Veröffentlichungsnummer: **0 235 611 B1**

(12) ## EUROPÄISCHE PATENTSCHRIFT

(45) Veröffentlichungstag der Patentschrift: **15.07.92**

(21) Anmeldenummer: **87101618.4**

(22) Anmeldetag: **06.02.87**

(51) Int. Cl.⁵: **A47L 9/12**, A47L 9/14

(54) Absaugvorrichtung für Verpackungs-Füllmaterial.

(30) Priorität: **28.02.86 DE 3606491**
**14.11.86 DE 3638964**

(43) Veröffentlichungstag der Anmeldung:
**09.09.87 Patentblatt 87/37**

(45) Bekanntmachung des Hinweises auf die
Patenterteilung:
**15.07.92 Patentblatt 92/29**

(84) Benannte Vertragsstaaten:
**AT BE CH DE ES FR GB GR IT LI NL**

(56) Entgegenhaltungen:
**DE-B- 2 106 058     DE-C- 645 195**
**GB-A- 1 443 494     GB-A- 1 500 982**
**GB-A- 2 141 635     US-A- 2 519 897**
**US-A- 2 531 920     US-A- 2 842 225**
**US-A- 4 287 635     US-A- 4 341 540**

(73) Patentinhaber: **ESTA Apparatebau GmbH &
Co. KG
Gotenstrasse 2-4
W-7913 Senden-Ay(DE)**

(72) Erfinder: **Kulitz, Günter
Heckenbühl 72
W-7900 Ulm/Donau(DE)**

(74) Vertreter: **Patentanwälte RUFF, BEIER und
SCHÖNDORF
Neckarstrasse 50
W-7000 Stuttgart 1(DE)**

EP 0 235 611 B1

**Beschreibung**

Die Erfindung betrifft eine Absaugvorrichtung nach dem Oberbegriff des Anspruchs 1.

Aus der US-A-25 31 920 ist eine solche Absaugeinrichtung bekannt geworden, die für das Absaugen von Kohle- und Holzasche bestimmt ist. Sie besitzt einen Filter für die aus dem als massive Tonne ausgebildeten Speicherbehälter austretende Luft, der als ein flexibler Filtersack ausgebildet ist, der an einen Austrittsstutzen auf dem Deckel des Speicherbehälters angeschlossen ist. Das abgesaugte Gut wird im Speicherbehälter gesammelt und nach dessen Demontage von der Absaugeinrichtung entleert.

Zur Polsterung von Verpackungsgut in Verpackungsbehältnissen, wie Kartons, werden die Hohlräume des Verpackungsbehältnisses häufig mit Füllmaterial gefüllt, wobei sich insbesondere Schaumpolystyrol-Chips bewährt haben. Beim Auspacken ist dieses Füllmaterial jedoch meist störend und es kann leicht zu Verschmutzungen führen. Zur Erleichterung des Entfernens des Füllmateriales können Absaugvorrichtungen der beschriebenen Art geeignet sein. Da jedoch das Füllmaterial bzw. die Verpackung häufig auch einen großen Staubanteil enthält, besteht beim Absaugen das Problem, den Speicherbehälter so zu entlüften, daß der mit dem Füllmaterlal angesaugte Schmutz bzw. Staub nicht ins Freie gelangt, was nicht gewährleistet ist, wenn die Entlüftungsöffnungen durch Löcher im Speicherbehälter gebildet sind. Ist der Luftaustritt dagegen durch einen an der Außenseite der Anschlußhalterung liegenden, im Betrieb durch den Überdruck im Speicherbehälter aufgeblähten Filtersack gebildet, so erstreckt sich der Luftaustritt über den gesamten Umfang dieses Filtersackes, was zu einem unkontrollierten Aufwirbeln von Staub in seiner Umgebung führen kann. Außerdem ergibt sich durch einen solchen Filtersack ein verhältnismäßig großer Raumbedarf.

Durch die GB-A-1 500 982 ist eine Absaugvorrichtung der genannten Art bekanntgeworden mit mehreren verschiedenen Ausführungsformen, bei der die Anschlußhalterung jedoch einen verhältnismäßig massiven Gebläsekopf bildet, der auf einen formstabilen, tonnenförmigen Speicherbehälter aufzusetzen ist und bei dem dann, wenn der Luftaustritt an der Oberseite dieses Gebläsekopfes vorgesehen ist, der Förderkanal seitlich tangential über einen Saugeinlaß am Speicherbehälter angeschlossen ist. Es wird auch ein Anschluß des Förderkanales an der Oberseite des Gebläsekopfes bei einer weiteren Ausführungsform vorgeschlagen, jedoch ist in diesem Fall die Anordnung und Lage des Luftaustrittes nicht erkennbar. Der Speicherbehälter ist genau an den Gebläsekopf angepaßt und kann daher nicht als Lager-Verpackung für die Grobteile dienen.

Durch die US-A-2 519 897 ist zwar auch eine Absaugvorrichtung mit einem flexiblen Speicherbehälter bekanntgeworden, jedoch ist dieser als auf die Absaugvorrichtung abgestimmter Filtersack ausgebildet, durch dessen Wandung der gesamte Luftaustritt völlig unkontrolliert nach allen Richtungen erfolgt.

Schließlich ist durch die DE-C-645 195 eine Absaugvorrichtung bekanntgeworden, die topfartig in einem formstabilen Speicherbehälter hängende Filter aufweist, wobei die die Filter tragende Anschlußhalterung an der Oberseite zum Anschluß eines Motorgebläses ausgebildet ist. Auch hier wird das Sauggut durch Evakuieren des formstabilen Speicherbehälters angesaugt.

Die GB-A-2 141 635 zeigt eine Absaugvorrichtung mit einem luftundurchlässigen Speicherbehälter in Form eines Beutels, der in einem Saugkessel an einem Behältereinsatz gehaltert ist, durch den An- und Absaugstutzen ragen. Die Absaugung erfolgt über einen im oberen Saugkesselteil angeordneten Filter und ein diesem nachgeschaltetes Gebläse. In dem Saugkessel muß um den Sack herum ein Ringraum abgegrenzt und auf besondere Weise mit der Absaugseite verbunden werden, um zu vermeiden, daß der Sack unter dem vom Gebläse erzeugten Unterdruck zusammenfällt. Die Vorrichtung ist daher sehr aufwendig, groß und schwer, insbesondere für große Beutel, die leichte Absauggüter aufnehmen sollen.

Der Erfindung liegt die Aufgabe zugrunde, eine Absaugvorrichtung der genannten Art zu schaffen, welche trotz gefilterter Entlüftung des Speicherbehälters einen verhältnismäßig eng begrenzten Luftaustritt der Entlüftung für den Speicherbehälter gewährleistet und mit geringem Bauaufwand auskommt.

Dies wird bei einer Absaugvorrichtung der eingangs beschriebenen Art gemäß der Erfindung dadurch erreicht, daß die Absaugvorrichtung zur Absaugung von Verpackungs-Füllmaterial ausgebildet ist, daß die Austrittsöffnung innerhalb einer deckelförmigen Anschlußhalterung zur Befestigung des Beutelrandes eines durch einen flexiblen Sammel-Beutel gebildeten Speicherbehälters ausgebildet ist und daß die Entlüftungsöffnung in der Anschlußhalterung innerhalb des von dem Beutelrand umgebenen Bereiches vorgesehen ist.

Die Entlüftungsluft tritt im wesentlichen nur an einer und im wesentlichen in einer Fläche bzw. Ebene liegenden Seite der Anschlußhalterung gefiltert aus und kann bei entsprechender Ausrichtung der austretenden Luft nicht oder nur unwesentlich zum Aufwirbeln von Staub bzw. Schmutz führen. Die erfindungsgemäße Absaugvorrichtung eignet sich besonders gut für Verpackungs-Füllmaterial, wie Schaumpolystyrol-Chips.

Diese vorteilhaften Wirkungen werden vor allem erreicht, wenn der Luftaustritt ausschließlich nach oben gerichtet ist und vorzugsweise in einer zur Ebene der Befüllöffnung des Speicherbehälters etwa parallelen Ebene liegt. Durch die erfindungsgemäße Anordnung kann der Staubfilter auch äußerst kompakt ausgebildet und raumsparend angeordnet werden, wobei er vorzugsweise im wesentlichen innerhalb der Anschlußhalterung liegt und nicht über diese vorsteht.

Zweckmäßig liegt der Staubfilter im Bereich einer, insbesondere der oberen, Stirnseite der Anschlußhalterung, die zur Abstützung des Staubfilters zweckmäßig eine Stirnwand aufweist, welche von Entlüftungsöffnungen durchsetzt ist. Es ist aber auch denkbar, daß der aus Gewebe- oder Filtermaterial bestehende Staubfilter wenigstens teilweise selbst die Stirnwand bildet, so daß eine gesonderte, formstabile Stirnwand nicht erforderlich ist, sondern die Anschlußhalterung im wesentlichen lediglich aus einem Ring besteht. Die Ausblasöffnung kann in diesem Fall im Mantel der Anschlußhalterung vorgesehen sein. Liegt die Ausblasöffnung jedoch in der Mittelachse der Anschlußhalterung, so ist deren Mantel bei Fehlen einer Stirnwand mit einer beispielsweise rahmenförmigen Verstrebung o.dgl. an dem die Ausblasöffnung bildenden Teil befestigt.

Eine besonders vorteilhafte Weiterbildung des Erfindungsgegenstandes besteht darin, daß der Luftaustritt die Ausblasöffnung wenigstens teilweise umgibt, wobei vorzugsweise mehrere Entlüftungsöffnungen In einem Kranz um die Ausblasöffnung vorgesehen sind, so daß also die nach unten gerichtete Ausblasrichtung der nach oben gerichteten Entlüftungsrichtung genau entgegengesetzt ist und sich im Speicherbehälter eine Umkehrströmung ergibt, die das Füllmaterial im Zentrum nach unten gerichtet in den Speicherbehälter einbringt und die Förderluft in einem Hüllstrom darum einschließlich der Staub- und Schmutzanteile entlang der Innenseite der Umfangswand des Speicherbehälters nach oben zum Staubfilter und damit zum Luftaustritt führt.

Besonders günstige Strömungsverhältnisse werden dabei insbesondere erreicht, wenn die Ausblasöffnung durch das freie Ende eines an der Innenseite der Anschlußhalterung liegenden Ausblasstutzens gebildet ist und dadurch gegenüber den Entlüftungsöffnungen in Ausblasrichtung vorverlegt ist.

Der Staubfilter kann, beispielsweise in Form einer einfachen, ringförmigen Vliesmatte, raumsparend zwischen dem Ausblasstutzen und dem, einen Stülprand für den Eingriff in den Speicherbehälter bildenden Mantel der Anschlußhalterung angeordnet und dadurch lediglich durch seine Eigenspannung bzw. durch die beim Betrieb herrschende Luftströmung gesichert werden, so daß sich der Staubfilter äußerst bequem auswechseln läßt.

Zweckmäßig ist ein Fördergebläse in Form eines Absaugventilators unmitelbar am Ständer vorgesehen, so daß sich kurze Verbindungswege zwischen dem Fördergebläse und der Ausblasöffnung ergeben. Die Luftleistung des Fördergebläses liegt zweckmäßig in der Größenordnung von 800 m³/h und maximal etwa 130 mm WS. Um eine möglichst hohe Wartungsfreiheit zu erreichen, weist das Fördergebläse zweckmäßig in jedem Fall einen Antriebsmotor in Form eines Drehstrommotors auf, der somit keinen Kollektor mit Kohlen benötigt, die regelmäßig ersetzt werden müssen und bei nicht rechtzeitigem Auswechseln in der Regel zu einer Zerstörung des Motors führen. Vorteilhaft ist der Drehstrommotor mit einem Kondensator versehen, so daß der Motor mit normalem Netzstrom von beispielsweise 220 V betrieben werden kann. Die Leistung des Motors liegt zweckmäßig in der Größenordnung von O,55 kW.

Zur Polsterung von Verpackungsgut in Verpakkungsbehältnissen, wie Kartons, werden die Hohlräume des Verpackungsbehältnisses häufig mit Füllmaterial gefüllt, wobei sich insbesondere Schaumpolystyrol-Chips oder ähnliche schüttfähige Kleinkörper-Medien von extrem niedrigem spezifischem Gewicht, jedoch relativ hoher Stabilität, großer Oberfläche und federnder Verformbarkeit bewährt haben. Die Verwendung von beliebigen Absaugvorrichtungen kann auch Schwierigkeiten machen, wenn das Füllmaterial mit Fremdbestandteilen durchsetzt ist, insbesondere mit Fremdbestandteilen von höherem spezifischem Gewicht. Beispielsweise besteht in der pharmazeutischen Industrie das Problem, daß bei Rückrufaktionen von Medikamenten die betroffenen Apotheker die Gelegenheit wahrnehmen und zusätzlich zu den meist in Schachteln verpackten Medikamenten noch Verpackungs-Füllmaterial in die Kartons einfüllen, um sich auf diese Weise von dem relativ schwer zu entsorgenden Füllmaterial zu befreien. Andererseits müssen aber auch die rückgerufenen, meist mit Gefahren verbundenen Medikamente, beispielsweise Tabletten, Pillen und ähnliches so entsorgt werden, daß jegliche Gefährdung ausgeschlossen ist. Die Trennung des Füllmaterials von den übrigen Fremdbestandteilen bzw. die Trennung des beispielsweise in Form von Schachteln, losen Pillen, Tabletten-Verpackungsstreifen, Beipackzetteln o.dgl. anfallenden Verpackungsgutes von dem Füllmaterial durch Verlesen von Hand ist äußerst mühsam, insbesondere weil diese Fremdbestandteile einerseits größere und andererseits kleinere Raumform als die Einzelkörper des Füllmateriales haben. Um auf einfache Weise das Füllmaterial von anderen Bestandteilen in kurzer Zeit zu trennen, kann bei einer vorteilhaften Weiterbildung der Erfindung gemäß Anspruch 7 eine Abscheidevorrichtung vorgesehen werden, die beim ersten Absaugen des Füllmateriales aus Verpackungsverhältnissen o.dgl. an den Förderstrom angeschlossen werden kann oder durch die in einem von diesem Absaugvorgang gesonderten Arbeitsprozess das mit Fremdbestandteilen durchsetzte Füllmaterial nochmals hindurchgefördert und dadurch so getrennt wird, daß die Fremdbestandteile von dem Füllmaterial abgeschieden werden. Zur Förderung des durchsetzten Füllmaterials kann daher auch eine Druckluftströmung eingesetzt werden. Besonders vorteilhaft ist es jedoch, wenn die Fremdbestandteile bereits während des ersten Absaugens des Füllmaterials abgeschieden werden, wobei gleichzeitig auch eventuell mit dem Füllmaterial angesaugter Staub o.dgl. abgeschieden werden kann, wenn die oben beschriebene Absaugvorrichtung eingesetzt wird. Diese zuletzt genannte Absaugvorrichtung kann dann über einen flexiblen Zwischenschlauch mit der Abscheidevorrichtung gemäß der Erfindung verbunden sein, von welcher wiederum ein, ein Absaugmundstück aufweisender flexibler Schlauch wegführt, mit welchem das durchsetzte Füllmaterial abgesaugt und dann in der Abscheidevorrichtung getrennt wird, wonach das getrennte Füllmaterial in die Absaugvorrichtung gefördert, dort zur Entfernung von Staub oder ähnlicher Partikel gefiltert und schließlich in einem Speicherbehälter gesammelt wird.

Es ist denkbar, die Abscheidekammer lediglich durch einen mit dem zugehörigen, die Absaugöffnung aufweisenden Schlauchabschnitt beweglichen Kammerteil zu bilden, der jedoch dann räumlich verhältnismäßig klein ausgebildet werden müßte, um eine ausreichende Beweglichkeit zu erhalten. Eine besonders vorteilhafte Weiterbildung ergibt sich durch die ersten Merkmale des Patentanspruches 8, da in diesem Fall die Partikel des Füllmaterials die Abscheidekammer nicht nur von einem Ende zum anderen Ende durchlaufen, sondern innerhalb der Abscheidekammer in Wirbelbahnen über so große Strecken bewegt werden, daß auch bei relativ hoher Fördergeschwindigkeit ausreichend Zeit zum Absinken der spezifisch schwereren bzw. keinen so großen Luftwiderstand bietenden Fremdbestandteile bleibt.

Des weiteren ist es denkbar, daß die Abscheidevorrichtung bzw. die Abscheidekammer einen Bestandteil der, ein Saugaggregat und/oder eine Aufnahme für einen Sammelbehälter aufweisenden Absaugvorrichtung bildet, d.h. mit dieser baulich integriert ist. Eine besonders vorteilhafte Weiterbildung ergibt sich jedoch, wenn die das Saugaggregat bzw. die Aufnahme für den Sammelbehälter aufweisende Absaugvorrichtung einen von der Abscheidevorrichtung gesonderten Bauteil bildet, so daß diese Bauteile jederzeit voneinander getrennt und unabhängig voneinander eingesetzt werden können.

Durch die Weiterbildungen nach weiteren Merkmalen des Patentanspruches 8 und 9 ergeben sich besonders günstige Strömungswege in der Abscheidekammer, einfache und übersichtliche Anschlußmöglichkeiten der Abscheidevorrichtung sowie ein einfacher und kompakter Aufbau bei relativ großem Aufnahmevolumen. Es hat sich als vorteilhaft erwiesen, wenn die Abscheidekammer Abmessungen in der Größenordnung von etwa 60 x 40 x 40 cm aufweist und sehr dünnwandig im wesentlichen aus Blech o.dgl. ausgebildet ist, so daß sie ein sehr geringes Gewicht aufweist und leicht als tragbares Gerät eingesetzt werden kann. Das Füllmaterial wird in der Abscheidekammer in einer Umkehr- und Wirbelströmung geführt, was für ein schnelles Abscheiden besonders günstig ist.

Zur Entfernung der abgeschiedenen Fremdbestandteile kann die Abscheidekammer eine Entleerungsöffnung aufweisen, durch welche beispielsweise die Fremdbestandteile herausgeschüttet oder herausgefallen lassen werden können. Es hat sich jedoch als besonders vorteilhaft erwiesen, wenn hierfür Weiterbildungen gemäß den weiteren Merkmalen des Patentanspruches 8 und nach den ersten Merkmalen des Patentanspruches 10 vorgesehen sind. Die Abscheidekammer kann dadurch auch leicht von haftengebliebenen Fremdbestandteilen befreit werden.

Damit die abgeschiedenen Fremdbestandteile sicher in den hierfür vorgesehenen Bereich gelangen und sich nicht in anderen Bereichen störend ansammeln können, sind in Weiterbildung der Erfindung die Merkmale gemäß Patentanspruch 10 vorgesehen. Gleichzeitig ist eine, Kippbewegungen der herausgezogenen Schublade verhindernde, Schubladenführung vorgesehen, welche zweckmäßig auch Leitglieder für die aus dem Förderstrom nach unten fallenden Fremdbestandteile bildet. Die Schublade kann zweckmäßig vollständig aus der Abscheidekammer herausgezogen und ganz von dieser gelöst werden, so daß sie auch als Transportwanne zur Entsorgung der Fremdbestandteile verwendet werden kann, ohne daß diese mit der Hand berührt werden müssen.

Damit der Abscheidevorgang ohne besonderen Aufwand jederzeit kontrolliert und die Menge der angesammelten Fremdbestandteile erfaßt werden kann, ist die Weiterbildung nach den letzten Merkmalen des Patentanspruches 10 vorgesehen.

Die Absaugvorrichtung kann durch einen einfachen, kofferartigen Kasten mit nur zwei Anschlüssen und ggf. Traggriffen an der Oberseite gebildet sein, so daß sich ein äußerst einfaches Abscheidegerät mit hohem Wirkungsgrad ergibt.

Diese und weitere Merkmale von bevorzugten Weiterbildungen der Erfindung gehen auch aus der Beschreibung und den Zeichnungen hervor. Ausführungsbeispiele der Erfindung sind in den Zeichnungen dargestellt und werden im folgenden näher erläutert. In den Zeichnungen zeigen:

Fig. 1 eine erfindungsgemäße Absaugvorrichtung in Seitenansicht;

Fig. 2 einen Teil des Ständers der Absaugvorrichtung gemäß Fig. 1 in Draufsicht;

Fig. 3 die Anschlußhalterung der Absaugvorrichtung gemäß Fig. 1 in Ansicht und mit angeordnetem Speicherbehälter;

Fig. 4 die Anschlußhalterung gemäß Fig. 3 in Draufsicht;

Fig. 5 eine erfindungsgemäße, an ein Absauggerät angeschlossene Absaugvorrichtung mit Abscheidung in perspektivischer Darstellung;

Fig. 6 die Absaugvorrichtung gemäß Fig. 5 in Ansicht auf die zu öffnende Seitenwand in gegenüber Fig. 1 vergrößerter perspektivischer Darstellung.

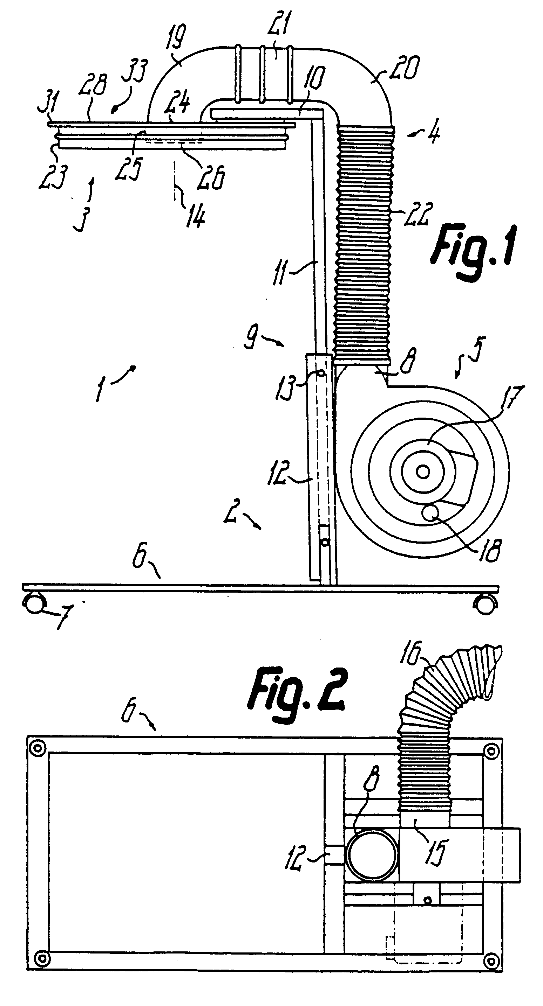

Die Absaugvorrichtung 1 gemäß den Fig. 1 bis 4 weist einen als Bodenständer ausgebildeten Ständer 2 und eine in dessen oberstem Bereich liegende Anschlußhalterung 3 für einen Speicherbehälter, insbesondere einen Beutel bzw. Sack aus Kunststoff-Folie auf. In die Anschlußhalterung mündet ein Förderkanal 4, der an die Druckseite bzw. den stutzenförmigen Auslaß 8 eines am Ständer 2 mit seinem Gehäuse befestigten Fördergebläses 5 angeschlossen ist. Der Ständer 2 weist einen rahmenförmigen, parallel zu seiner Standebene liegenden Fuß 6 auf, der mit selbstlenkenden Laufrollen 7 fahrbar ist und unterhalb der Anschlußhalterung 3 eine Stütz- bzw. Aufstandsfläche für den Speicherbehälter bildet. An dem in Draufsicht länglichen rechteckigen Fuß 6 ist an einer zwischen dessen Enden liegenden Quertraverse eine einzige mittlere Säule 9 befestigt, die am oberen Ende einen winkelförmig angesetzten, frei ausragenden Tragarm 10 aufweist, an welchem die Anschlußhalterung 3 befestigt ist. Die Anschlußhalterung 3 liegt auf der vom Fördergebläse 5 abgekehrten Seite der Säule 9. Die Anschlußhalterung 3 ist an einem vom Fuß 6 abnehmbaren Säulenteil 11 befestigt, der nach Art einer Teleskopsäule in einen am Fuß 6 befestigten Säulenteil 12 eingesetzt und mit Sicherungsgliedern 13, wie Bolzen, gesichert ist. Der Säulenteil 11 kann mit der Anschlußhalterung 3 gegenüber dem Fuß 6 in Höhenrichtung stufenlos verstellbar und in der jeweiligen Einstellung festsetzbar angeordnet sein, so daß die Säule 9 an unterschiedlich hohe Speicherbehälter angepaßt werden kann.

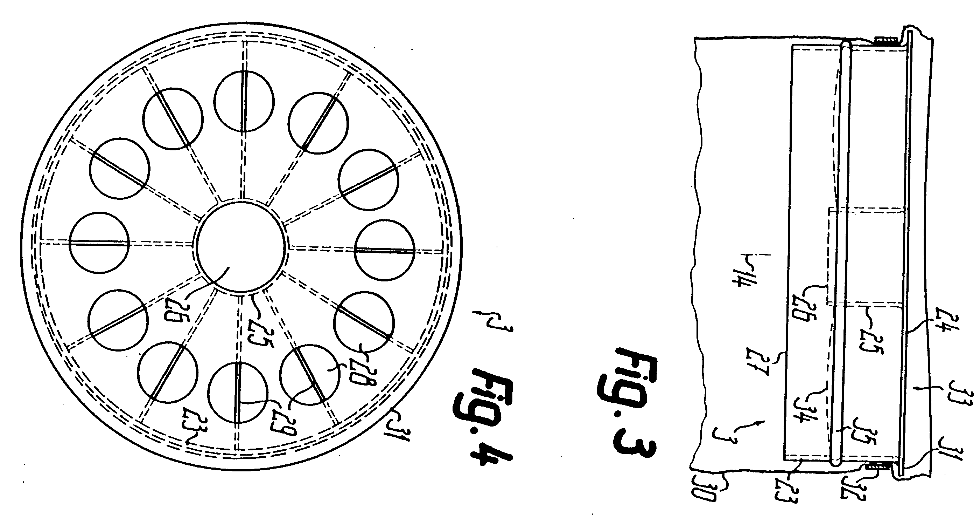

Das axial an einer Seite ansaugende und tangential ausblasende Fördergebläse 5 ist mit der von seiner Mittelachse abgekehrten, dem Auslaß 8 zugehörigen Außenseite seines Gehäuses derart der Säule 9 zugekehrt angeordnet, daß seine Mittelachse in Draufsicht auf die Absaugvorrichtung etwa tangential zu einem um die Mittelachse 14 der Anschlußhalterung 3 gelegten Kreis liegt. Mit dieser Außenseite kann das Fördergebläse 5 unmittelbar am feststehenden Säulenteil 12 so befestigt sein. daß es berührungsfrei oberhalb des Fusses 6 liegt. An einer Stirnseite weist das Fördergebläse 5 einen Einlaß 15 in Form eines Ansaugstutzens auf, an welchen ein sehr flexibler Saugschlauch 16 von beispielsweise etwa 100 mm Durchmesser angeschlossen ist. Der beispielsweise etwa 2,5 m lange Saugschlauch 16 weist an seinem freien Ende ein nicht näher dargestelltes, eine Saugdüse bildendes Saugrohr auf, das aus zwei teleskopartig miteinander verbundenen und gegeneinander verdrehbaren Rohrteilen bestehen kann und zweckmäßig mit einem Handgriff zur sicheren Führung versehen ist. An der anderen Stirnseite ist das Fördergebläse 5 mit einem in Fig. 2 nur strichpunktiert angedeuteten Antriebsmotor 17 in Form eines Drehstrommotors versehen, der einen Kondensator 18 aufweist und dessen Motorwelle unmittelbar den im Gehäuse liegenden Rotor des Fördergebläses 5 trägt.

Die deckelförmige, etwa in einer horizontalen Ebene liegende Anschlußhalterung 3 ist an der Unterseite des in einer ihrer Axialebenen liegenden Tragarmes 10 mit ihrer Oberseite befestigt. Der Förderkanal 4 mündet in der Mittelachse 14 in die Oberseite der Anschlußhalterung 3, wobei an der Oberseite der Anschlußhalterung 3 ein viertelkreisförmiger Rohrkrümmer 19 des Förderkanales 4 angeschlossen bzw. befestigt ist, der über den Tragarm 10 gekrümmt ist. Der Rohrkrümmer 19 ist über einen weiteren, gleichen Rohrkrümmer 20 an einen flexiblen bzw. längendehnbaren Schlauch 22 des Förderkanales 4 angeschlossen, welcher etwa vertikal verlaufend an der von der Anschlußhalterung 3 abgekehrten Seite der Säule 9 liegt und mit seinem unteren Ende am Auslaß 8 durch Überschieben angeschlossen ist. Zwischen den achsgleich zueinander liegenden Enden der beiden Rohrkrümmer 19, 10 können noch Zwischenglieder in Form von Zwischenmuffen und ggf. Nippeln vorgesehen sein. Durch die beschriebene Ausbildung wird der zwischen dem Auslaß 8 und der Anschlußhalterung 3 liegende Förderkanal 4 im wesentlichen ausschließlich unmittelbar von der Anschlußhalterung 3 getragen. Es ist aber auch denkbar, den im Bereich des Tragarmes 10 liegenden Teil des Förderkanales 4 unmittelbar am Tragarm 10 zu befestigen, wobei dann zweckmäßig die Anschlußhalterung 3 ohne unmittelbare Befestigung am Tragarm 10 von dem Rohrkrümmer 19 getragen wird. Die Axialerstreckung des Fördergebläses 5 bzw. von dessen Gehäuse ist nur etwa gleich groß wie die Weite des Auslasses 8, derart, daß der Antriebsmotor 17 in Draufsicht gemäß Fig. 2 vollständig innerhalb der Außenbegrenzung des Fusses 6 liegt.

Wie insbesondere die Fig. 3 und 4 zeigen, weist die dünnwandig aus Blech, Kunststoff o.dgl. bestehende Anschlußhalterung 3 im wesentlichen nur einen kreisförmigen Ringmantel in Form einer im wesentlichen zylindrischen Stülpmantels 23 und eine diesen an der oberen Stirnseite verschließende, ebene Stirnwand 24 auf, an der ein ausschließlich über ihre Innenseite vorstehender, in der Mittelachse 14 liegender Ausblasstutzen 25 befestigt ist. Das untere, zur Mittelachse 14 rechtwinklig liegende Ende des Ausblasstutzens 25 bildet eine Ausblasöffnung 26 des Förderkanales 4, die gegenüber der unteren, zu ihr parallelen Stirnseite 27 des Stülpmantels 23 annähernd um die Hälfte von dessen Höhe zurückversetzt ist. In der Stirnwand 24 sind in einem Kranz um die Mittelachse 14 bzw. um den Ausblasstutzen 25 mehrere, im dargestellten Ausführungsbeispiel 12 kreisrunde Entlüftungsöffnungen 28 in Form von Durchbrüchen der Stirnwand 24 vorgesehen, die somit gegenüber der Ausblasöffnung 26 um die Länge des Ausblasstutzens 25 zurückversetzt sind. Der Ringraum um den Ausblasstutzen 25 und innerhalb des Stülpmantels 23 dient zur auswechselbaren Aufnahme eines ringförmigen Staubfilters 34, der zweckmäßig so bemessen ist, daß er diesen Ringraum im wesentlichen vollständig ausfüllt und mit Pressung am Außenumfang des Ausblasstutzens 25, am Innenumfang des Stülpmantels 23 und an der Innenseite der Stirnwand 24 anliegt. Die Dicke des Staubfilters 34 ist zweckmäßig geringfügig kleiner als die Länge des Ausblasstutzens 25 gewählt, so daß die einlaßseitige Stirnfläche des Staubfilters 34 gegenüber der Ausblasöffnung 26 geringfügig zurückversetzt ist. Im Bereich der einlaßseitigen Stinseite des Staubfilters 34 weist der Stülpmantel 23 eine ringförmige Sicke 35 auf, welche an der Innenseite des Stülpmantels 23 eine Vertiefung bildet, in welche der Staubfilter 34 lagesichernd eingreifen kann. Es ist auch denkbar, in diese Vertiefungen Halteglieder, beispielsweise herausnehmbare Anschlagstäbe einzusetzen, welche den Staubfilter 34 gegen Herausfallen sichern. Die Sicke 35 bildet gleichzeitig eine wesentliche Versteifung des Stülprandes 23. Die Entlüftungsöffnungen 28 werden ebenfalls von Anschlagstäben 29 gekreuzt, die an der Innenseite der Stirnwand 24 strahlenförmig um die Mittelachse 14 so angeordnet sind, daß jeweils ein Anschlagstab 29 eine Entlüftungsöffnung 28 diametral kreuzt. Durch diese Anschlagstäbe 29 wird verhindert, daß unter der auftretenden Luftströmung der Staubfilter 34 durch die Entlüftungsöffnungen 28 nach außen gedrückt wird, so daß ein verhältnismäßig lockeres Filtermaterial verwendet werden kann. Der Gesamtquerschnitt der Entlüftungsöffnungen 28 ist mehrfach größer als der Querschnitt der Ausblasöffnung 26, wobei der Querschnitt der einzelnen Entlüstungsöffnung 28 insbesondere etwa halb so groß wie der der Ausblasöffnung 26 ist. Durch die Entlüftungsöffnungen 28 ist ein - in Strömungsrichtung gesehen - die Ausblasöffnung 26 umgebender Luftaustritt 33 gebildet.

Der Speicherbehälter 30 wird mit seinem seiner Füllöffnung zugehörigen Rand von unten über den Stülpmantel 23 der Anschlußhalterung 3 so gestülpt, daß er im wesentlichen auf volle Weite gedehnt ist und über die Stirnwand 24 hinausreicht. Die Stirnwand 24 bildet einen über den Außenumfang des Stülprandes 23 vorstehenden, ringförmigen Rand 31, über welchen der Speicherbehälter gezogen werden kann, so daß er ggf. bereits durch seine Eigenspannung gegenüber diesem Rand 31 und damit gegenüber der Anschlußhalterung 3 gesichert ist. Zur zusätzlichen Sicherung ist ein, beispielsweise federelastisch längendehnbares Spannband 32 vorgesehen, das unmittelbar unterhalb des Randes 31 um den Speicherbehälter 30 gelegt wird und diesen dicht verschließend gegen den Außenumfang des Stülprandes 23 spannt. Nach Entfernen des Spannbandes 32 kann der gefüllte Speicherbehälter 30 ohne weiteres nach unten von der Anschlußhalterung 3 abgezogen werden. Zum Anschluß des Förderkanales 4 an die Anschlußhalterung 3 ist das zugehörige, nach unten gerichtete Ende des Rohrkrümmers 19 in den Ausblasstutzen 25 gesteckt.

Die erfindungsgemäße Absaugvorrichtung arbeitet mit einem sehr hohen Luft-Fördervolumen, jedoch mit verhältnismäßig niedrigem Unterdruck, weshalb als Fördergebläse kein gewöhnlicher Staubsaugermotor, sondern ein Leichtmaterial-Transportgebläse vorgesehen ist. Dadurch kann das Gerät im Dauerbetrieb eingesetzt werden. Infolge des in der Anschlußhalterung 3 vorgesehenen Luftaustrittes 33 kann der Speicherbehälter 30 allseits luftdicht geschlossene Wandungen aufweisen, so daß beim Betrieb von der Absaugvorrichtung keine Zugluft ausgeht. Ein weiterer wesentlicher Vorteil der Absaugvorrichtung liegt in deren Laufruhe.

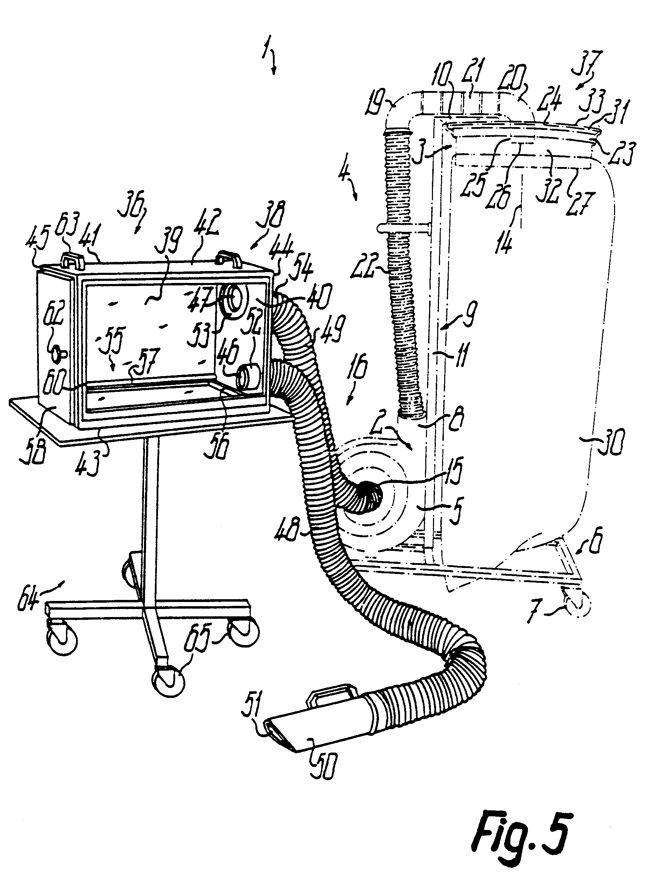

Die in Fig. 5 dargestellte Absaugvorrichtung I besteht im wesentlichen aus zwei Einzel-Absaugvorrichtungen 36, 37, wobei im folgenden insbesondere die Absaugvorrichtung 36 beschrieben und mit der Einzel-Absaugvorrichtung 37 gemäß den Fig. 1 bis 4 oder einer anderen geeigneten Vorrichtung zusammenschließbar ist.

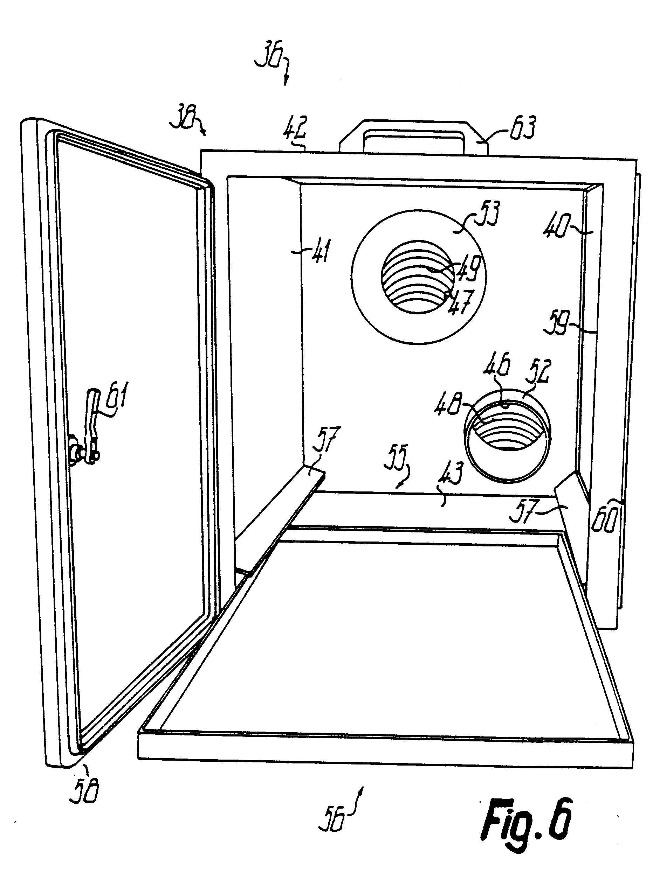

Die Einzel-Absaugvorrichtung 36 gemäß den Fig. 5 und 6 weist ein rechteckiges, in Seitenansicht im wesentlichen quadratisches und gegenüber den Kantenmaßen seiner Seitenwände um etwa die Hälfte breiteres Gehäuse 38 aus Blech auf, dessen Innenraum im wesentlichen vollständig eine entsprechend rechteckige und nahezu den Außenabmessungen des Gehäuses 38 entsprechende Abscheidekammer 39 bildet. Das Gehäuse 38 weist eine vordere, vertikale Gehäusewand 40, eine dazu parallele hintere Gehäusewand 41, eine horizontale obere Gehäusewand 41, eine dazu parallele untere und eine Standfläche der Absaugvorrichtung 36 bildende untere Gehäusewand 43 sowie zwei vertikale seitliche Gehäusewände 44, 45 auf.

Eine seitliche Gehäusewand 44 ist von einer Einlaßöffnung 46 und einer Auslaßöffnung 47 durchsetzt, wobei die Einlaßöffnung 46 an einen den anderen Endabschnitt des Förderkanales 4 bildenden flexiblen Saugschlauch 48 und die Auslaßöffnung 47 an einen flexiblen, einen Zwischenabschnitt des Förderkanales 4 bildenden Zwischenschlauch 49 leicht lösbar anzuschließen ist. Der Schlauch 22, der Saugschlauch 48 und der Zwischenschlauch 49 weisen zweckmäßig etwa gleiche Querschnitte auf und können beispielsweise einen Durchmesser von etwa 100 mm haben. Der Saugschlauch 48 trägt an seinem von der Absaugvorrichtung 36 abgekehrten Ende ein lösbares Mundstück 50 mit einem Handgriff zum Tragen bzw. Führen, wobei dieses Mundstück 50 die der Absaugvorrichtung 36 zugehörige Absaugöffnung 51 bildet, mit welcher das zu säubernde und im Speicherbehälter 30 zu sammelnde Füllmaterial aufgesaugt werden kann.

Die gegenüber der Innenseite der seitlichen Gehäusewand 44 etwa um ihren Durchmesser nach innen versetzte Einlaßöffnung 46 ist durch einen die Gehäusewand 44 etwa rechtwinklig durchsetzenden und sowohl über deren Innenseite wie auch über deren Außenseite vorstehenden Rohrstutzen 52 gebildet, wobei ihre Begrenzung etwa in einer zur Gehäusewand 44 parallelen bzw. vertikalen Ebene liegt. Die Einlaßöffnung 46 ist nahe benachbart zur unteren Gehäusewand 43 sowie zur vorderen Gehäusewand 40 im zugehörigen Eckbereich der Gehäusewand 44 vorgesehen. Die Auslaßöffnung 47 liegt im zur Gehäusewand 44 parallelen Boden einer ringförmigen Vertiefung 53 an der Innenseite dieser Gehäusewand 44, wobei diese Vertiefung 53 etwa doppelt so großen Durchmesser wie die Auslaßöffnung 47 aufweist. Die Auslaßöffnung 47 ist durch das innere Ende eines nur nach außen über die Gehäusewand 44 vorstehenden Rohrstutzens gebildet, dessen äußeres Ende ebenso wie das äußere Ende des Rohrstutzens 52 einen Steckstutzen 54 für den Anschluß des zugehörigen Schlauches durch Aufstecken bildet. Die Einlaßöffnung 47 liegt näher bei der hinteren Gehäusewand 41 als bei der vorderen Gehäusewand 40 und lediglich um die Ringbreite der Vertiefung 53 im Abstand von der oberen Gehäusewand 42 im zugehörigen oberen und hinteren Eckbereich der seitlichen Gehäusewand 44.

Im unteren Bereich weist das Gehäuse eine den Boden der Abscheidekammer 39 bildenden Auffang- und Sammeleinrichtung 55 für abzuscheidende Fremdbestandteile auf. Die Sammeleinrichtung 55 ist im wesentlichen durch eine den gesamten Boden der Abscheidekammer 39 bildende, wannen- bzw. flachschalenförmige Schublade 56 mit einem verhältnismäßig niedrigen aufrechten Schalenrand gebildet, die annähernd gleiche Abmessungen wie die untere Gehäusewand 43 des Gehäuses 38 hat und diese im wesentlichen vollständig abdeckt. An den Innenseiten der größten Gehäusewände, nämlich der vorderen Gehäusewand 40 und der hinteren Gehäusewand 41 sind zwei gleiche, über deren gesamte Breite reichende Leitglieder 57 in Form von streifenförmigen Leitblechen befestigt, deren nach innen ragende und schräg nach unten gerichtete Leitschenkel die zugehörigen Schalenränder der Schublade 56 mit geringem Abstand übergreifen und dadurch obere Gleitführungen für die Schublade 56 bilden, die mit ihrer Unterseite auf der Innenseite der unteren Gehäusewand 43 gleitbar geführt ist. Die Leitglieder 57 bilden mit den zugehörigen Bereichen der Gehäusewände 40, 41 und mit der Gehäusewand 43 seitliche, U-förmig begrenzte Führungsschlitze für die Schublade 56. Die tiefste Stelle der Begrenzung der Einlaßöffnung 46 liegt etwa in Höhe der Leitglieder 57.

Die der Einlaßöffnung 46 und der Auslaßöffnung 47 gegenüberliegende seitliche Gehäusewand 45 ist annähernd über ihre gesamte Fläche durch eine Gehäusetüre 58 gebildet, mit welcher eine diese Gehäusewand 45 annähernd auf voller zugehöriger Innenweite der Abscheidekammer 39 durchsetzende Türöffnung 59 dicht verschlossen gehalten werden kann. Die Gehäusetür 58 ist um eine vertikale, benachbart zur hinteren Gehäusewand 41 liegende Türachse außer Schließlage um mindestens 90° schwenkbar, so daß sie die Türöffnung 59 freigibt und die Schublade 56 vollständig aus dem Gehäuse 38 herausgezogen werden kann. An der Innenseite der Gehäusetür 58 ist eine elastische, ringförmig geschlossene Dichtung befestigt, welche bei Schließlage der Gehäusetür 58 unmittelbar benachbart zu den im rechten Winkel zueinander liegenden Begrenzungskanten der Türöffnung 59 an der Außenseite der Gehäusewand 45 unter Pressung anliegt. In geschlossenem Zustand kann die Gehäusetür 58 mit einem an ihrer Innenseite liegenden Riegel 61 gesichert werden, der mit einer an der Außenseite der Gehäusetür 58 liegenden Handhabe 62 betätigbar ist.

An der Oberseite weist die Absaugvorrichtung 36 benachbart zu den seitlichen Gehäusewänden 44, 45 liegende, bügelförmige Traggriffe 63 auf, die an der oberen Gehäusewand 42 befestigt sind und einen einfachen Transport der Absaugvorrichtung 36 ermöglichen. Zweckmäßig ist der Absaugvorrichtung 36 ein vom Fahr- bzw. Traggestell der Einzel-Absaugvorrichtung 37 gesondertes Traggestell 64 zugeordnet, das vorteilhaft ebenfalls als Fahrgestell mit selbstlenkenden Laufrollen 65 ausgebildet und nach Art eines Fahrgestellzuges ausschließlich über den Zwischenschlauch 59 mit der Einzel-Absaugvorrichtung 37 zu verbinden ist, so daß beide Einzel-Absaugvorrichtungen 36, 37 jederzeit in der für die gegebenen räumlichen Verhältnisse günstigste Position zueinander angeordnet werden können. Das Traggestell 64 ist im dargestellten Ausführungsbeispiel als Einsäulentisch ausgebildet, auf dessen Tischplatte die Absaugvorrichtung 36 abhebbar und ohne direkte Befestigungsverbindung gestellt ist. An der Unterseite weist dieser Tisch einen Sternfuß mit vier Laufrollen 65 auf. Die Trag- bzw. Standplatte für die Absaugvorrichtung 36 kann höhenverstellbar und/oder um eine vertikale Achse drehbar an dem Traggestell 64 angeordnet sein, so daß die Absaugvorrichtung 36 jederzeit in die günstigste Lage gebracht werden kann. Durch die beschriebene Ausbildung weist der Förderkanal 4 von der Auslaßöffnung 47 zum Einlaß des Gebläses 5 Gefälle auf, so daß sich ein besonders günstiger Wirkungsgrad ergibt. Von der Absaugöffnung 51 zur Einlaßöffnung 46 weist der Förderkanal 4 dagegen Steigung auf.

Die erfindungsgemäße Absaugvorrichtung arbeitet wie folgt: Nach Einschalten des Fördergebläses 5 wird die Abscheidekammer 39 unter Unterdruck gesetzt, so daß über die Absaugöffnung 51 ein Saugstrom in die Abscheidekammer 39 gerichtet ist. Das mit Fremdbestandteilen durchmischte Füllmaterial gelangt im Luftstrom durch die Einlaßöffnung 46 in die Abscheidekammer 39, die einen gegenüber den Querschnitten des übrigen Förderkanales 4 wesentlich größeren Strömungsquerschnitt aufweist, so daß die gewichtsmäßig schwereren Fremdbestandteile aus dem Luftstrom in die Sammeleinrichtung 55 ausfallen, während die Partikel des Füllmaterials im Umkehr-Wirbelstrom im wesentlichen durch die gesamte Abscheidekammer 39 bewegt werden, bis sie in die Auslaßöffnung 47 abgesaugt werden und dadurch über den Zwischenschlauch 49 saugseitig in das Fördergebläse 5 gelangen. Die Partikel des Füllmaterials werden durch das Fördergebläse 5 zu dessen Druckseite befördert und dann im Druckluftstrom nach oben durch den Schlauch 22 in den Speicherbehälter 30 gefördert, aus dem die Förderluft nach oben staubgefiltert austritt. Es hat sich gezeigt, daß selbst kleinste und auch relativ leichte Fremdbestandteil-Partikel, wie kleinste Tabletten und Holzwollspäne in der Abscheidekammer 39 abgetrennt und der Sammeleinrichtung 55 zugeführt werden. Zur Kontrolle der Arbeit der Absaugvorrichtung 46 ist deren vordere Gehäusewand 40 im wesentlichen über die gesamte Höhe und Breite, insbesondere in dem oberhalb des zugehörigen Leitgliedes 57 liegenden Bereich durch ein Sichtfenster gebildet. Dieses Sichtfenster kann in einfacher Weise durch eine ebene Platte aus einem durchsichtigen Kunststoff (Plexiglas) o.dgl. gebildet sein, die lediglich mit Befestigungsbolzen, wie Schrauben an der Außenseite des aus Blech gefertigten Randes der vorderen Gehäusewand 40 befestigt ist.

## Patentansprüche

1. Absaugvorrichtung mit einem Ständer (2) und einem einem Fördergebläse (5) nachgeschalteten Förderkanal (4), dessen eines, der Befüllöffnung eines Speicherbehälters (30) zugehöriges Ende eine unmittelbar in den Speicherbehälter (30) mündende Austrittsöffnung (26) bildet, und mit wenigstens einer zur Bildung eines Luftaustrittes (33) ins Freie führenden Entlüftungsöffnung (28) für den ansonsten im wesentlichen luftdichten Speicherbehälter (30), der ein Staubfilter (34) zugeordnet ist, dadurch gekennzeichnet, daß die Absaugvorrichtung zur Absaugung von Verpackungs-Füllmaterial ausgebildet ist, daß die Austrittsöffnung (26) innerhalb einer deckelförmigen Anschlußhalterung (3) zur Befestigung des Beutelrandes eines durch einen flexiblen Sammel-Beutel gebildeten Speicherbehälters ausgebildet ist und daß die Entlüftungsöffnung in der Anschlußhalterung (3) innerhalb des von dem Beutelrand umgebenen Bereiches vorgesehen ist.

2. Absaugvorrichtung nach Anspruch 1, dadurch gekennzeichnet, daß der nach oben gerichtete Luftaustritt (33) an einer Stirnseite der Anschlußhalterung (3) als mindestens ein Durchbruch in einer Stirnwand (24) der deckelförmigen Anschlußhalterung (3) vorgesehen ist, daß der Luftaustritt (33) und/oder der Staubfilter (34) im wesentlichen in einer Ebene, insbesondere in einer zur Mittelachse (14) der Anschlußhalterung (3) etwa rechtwinkligen Ebene vorgesehen ist, daß der Staubfilter (34) im wesentlichen innerhalb der Anschlußhalterung (3), insbesondere unmittelbar benachbart zur Innenseite der Stirnwand (24) liegt.

3. Absaugvorrichtung nach Anspruch 1 oder 2, dadurch gekennzeichnet, daß der Luftaustritt (33) die etwa in der Mittelachse (14) der Anschlußhalterung (3) liegende Austrittsöffnung (26) wenigstens teilweise umgibt und insbesondere mehrere Entlüftungsöffnungen (28) in einem Kranz um die Austrittsöffnung (26) vorgesehen sind, daß ferner vorzugsweise die Entlüftungsöffnung (28) in Austrittsrichtung gegenüber der Austrittsöffnung (26), insbesondere mindestens etwa um die Dicke des Staubfilters (34), zurückversetzt liegt und die Austrittsrichtung der Entlüftungsrichtung entgegengesetzt ist, daß ferner vorzugsweise die Austrittsöffnung (26) durch das freie Ende eines an der Innenseite der Anschlußhalterung (3) liegenden Ausblasstutzens (25) gebildet ist und insbesondere gegenüber dem freien Rand eines für den Eingriff in den Speicherbehälter (30) vorgesehenen Stülpmantels (23) der Anschlußhalterung (3) zurückversetzt liegt, daß ferner vorzugsweise der Gesamtquerschnitt der Entlüftungsöffnung (28) oder der Entlüftungsöffnungen (28) mehrfach größer als der Querschnitt der Austrittsöffnung (26) bzw. der Querschnitt der einzelnen Entlüftungsöffnung (28) etwa halb so groß wie der der Austrittsöffnung (26) ist und/oder daß vorzugsweise die Austrittsöffnung (26) nach unten gerichtet und die Anschlußhalterung (3) insbesondere für die Verbindung mit dem mit obenliegender Füllöffnung stehenden Speicherbehälter (30) ausgebildet ist, wobei bevorzugt dem innerhalb des Außenumfanges über die Unterseite der Stirnwand (24) vorstehenden Stülprand (23) ein Sicherungsglied, wie ein Spannband (32), für den Rand des luftundurchlässigen Speicherbehälters (30) zugeordnet ist.

4. Absaugvorrichtung nach einem der vorhergehenden Ansprüche, dadurch gekennzeichnet, daß über den Außenumfang der Anschlußhalterung (30) eine ringförmige Begrenzung vorsteht, die bevorzugt durch den Rand (31) der am zugehörigen Ende der Anschlußhalterung (3) liegenden Stirnwand (24) gebildet ist, wobei vorzugsweise ein einziger Staubfilter (34), insbesondere in Form einer Vliesmatte, für alle Entlüftungsöffnungen vorgesehen und bevorzugt ringförmig zwischen dem Ausblasstutzen (25) und dem Stülprand (23) in der Anschlußhalterung (3) auswechselbar angeordnet ist, daß ferner vorzugsweise die Anschlußhalterung (3) und/oder der Staubfilter (34) kreisförmig ausgebildet ist und/oder daß die jeweilige Entlüftungsöffnung (28), insbesondere an der Innenseite der Stirnwand (24) von einem Anschlag für den Staubfilter (34) gekreuzt ist, wobei bevorzugt sternförmig um die Austrittsöffnung (26) liegende Anschlagstäbe (29) vorgesehen sind.

5. Absaugvorrichtung nach einem der vorhergehenden Ansprüche, dadurch gekennzeichnet, daß am Ständer (2), insbesondere im untersten Bereich, das Fördergebläse (5), bevorzugt mit tangentialem Auslaß (8) und/oder mit axialem Einlaß (15) angeordnet ist, daß vorzugsweise das Fördergebläse (5) einen Antriebsmotor (17) in Form eines Drehstrommotors aufweist, der insbesondere mit einem Kondensator (18) versehen ist und/oder daß vorzugsweise der Antriebsmotor (17) außen an das Fördergebläse (5) angeflanscht ist und insbesondere wie das Fördergebläse (5) mit horizontaler und in Draufsicht zur Anschlußhalterung (3) etwa tangentialen Mittelachse angeordnet ist.

6. Absaugvorrichtung nach einem der vorhergehenden Ansprüche, dadurch gekennzeichnet, daß die Anschlußhalterung (3), vorzugsweise über eine Teleskop-Säule (9) des Ständers (2), höhenverstellbar und/oder abnehmbar gehaltert ist und oberhalb eines Fußes (6) des Ständers (2) liegt, daß vorzugsweise das Fördergebläse (5) am feststehenden Unterteil des Ständers (2), insbesondere mit seiner dem Auslaß (8) zugehörigen Seite am unteren Säulenteil (12) der Teleskop-Säule (9) angeordnet und über einen flexiblen bzw. längendehnbaren Schlauch (22) mit einem die Anschlußhalterung (3) tragenden Rohrkrümmer (19, 20) des Förderkanales (4) verbunden ist und/oder daß der Ständer (2) als Fahrgestell ausgebildet ist und insbesondere am rahmenförmigen Fuß (6) selbstlenkende Laufrollen (7) aufweist.

7. Absaugvorrichtung nach einem der vorhergehenden Ansprüche, dadurch gekennzeichnet, daß ihr ein mit einem Ende an eine Saugquelle anzuschließender und mit dem anderen Ende eine Absaugöffnung (51) für das Füllmaterial aufweisender Förderkanal (48, 49) zugeordnet ist und daß eine Abscheidekammer (39) für mit dem Füllmaterial geförderte Fremdbestandteile an den Förderkanal (4) anschließbar ist.

8. Absaugvorrichtung nach Anspruch 7, dadurch gekennzeichnet, daß die Abscheidekammer (39) als Wirbelkammer für das Füllmaterial ausgebildet ist und insbesondere im Bodenbereich eine Auffang- und Sammeleinrichtung (55) für die Fremdbestandteile aufweist, die beispielsweise durch eine Sammelwanne gebildet ist, daß vorzugsweise die Abscheidekammer (39) als im Querschnitt erweiterter Zwischenabschnitt des Förderkanales (48, 49) ausgebildet und mit Anschlüssen für die leicht lösbare Verbindung mit mindestens einem anschließenden Abschnitt des Förderkanales (48, 49) versehen ist, daß ferner vorzugsweise die Abscheidekammer (39) eine Einlaßöffnung (46) für das über die Absaugöffnung (51) angesaugte Füllmaterial und eine Auslaßöffnung (47) für das abgeschiedene Füllmaterial aufweist, die insbesondere höher als die Einlaßöffnung (46) und/oder gegenüber dieser horizontal versetzt liegt, daß ferner vorzugsweise die Abscheidekammer (39) im wesentlichen rechteckig ausgebildet, insbesondere durch ein Blechgehäuse gebildet ist und/oder daß die Sammeleinrichtung (55) in gefülltem Zustand aus der Abscheidekammer (39) herausfahrbar angeordnet, insbesondere im wesentlichen durch eine flachschalenförmige Schublade (56) gebildet ist, die bevorzugt im wesentlichen den gesamten Boden der Abscheidekammer (39) einnimmt.

9. Absaugvorrichtung nach Anspruch 7 oder 8, dadurch gekennzeichnet, daß die Einlaßöffnung (46) der Abscheidekammer (39) annähernd in deren tiefsten Bereich, insbesondere annähernd bis in Höhe eines Bodens der Sammeleinrichtung (55) reichend und/oder benachbart zu einer vorderen Gehäusewand (40) der Abscheidekammer (39) vorgesehen ist, daß vorzugsweise die Auslaßöffnung (47) der Abscheidekammer (39) annähernd in deren höchsten Bereich, insbesondere mit einem etwa ihrer Weite entsprechenden lichten Abstand von einer oberen Gehäusewand (42) der Abscheidekammer (39) und/oder benachbart zu einer hinteren Gehäusewand (41) der Abscheidekammer (39) vorgesehen ist, daß ferner vorzugsweise mindestens eine der durch die Einlaß- und die Auslaßöffnung (46, 47) gebildeten Öffnungen in einer der seitlichen Gehäusewände (44) der Abscheidekammer (39) vorgesehen und diese Gehäusewand (44) insbesondere flächenkleiner als die vordere, die hintere, die untere und/oder die obere Gehäusewand der Abscheidekammer (39) ist, daß ferner vorzugsweise die Einlaßöffnung (46) und die Auslaßöffnung (47) in derselben Gehäusewand (44) der Abscheidekammer (39) vorgesehen sind und die insbesondere durch das Ende eines Rohrstutzens (52) gebildete Einlaßöffnung (46) gegenüber der Auslaßöffnung (47) bzw. gegenüber der zugehörigen Gehäusewand (44) nach innen in die Abscheidekammer (39) und/oder die Auslaßöffnung (47) mit einem engsten Querschnitt gegenüber der zugehörigen Gehäusewand (44) nach außen versetzt ist, daß ferner vorzugsweise die Einlaßöffnung (46) der Abscheidekammer (39) etwa um ihre lichte Weite in die Abscheidekammer (39) nach innen und/oder die Auslaßöffnung (47) um weniger als ihre lichte Weite nach außen versetzt ist und die Auslaßöffnung (47) insbesondere in einer an der Innenseite der zugehörigen Gehäusewand (44) vorgesehenen Vertiefung (53) liegt, deren Umfangsbegrenzung die Auslaßöffnung (47) mit Abstand umgibt und/oder daß die Einlaß- und Auslaßöffnungen (46, 47) der Abscheidekammer (39) etwa gleiche Weite bzw. Querschnitte aufweisen und insbesondere mindestens eine dieser Öffnungen in einen über die Außenseite der zugehörigen Gehäusewand (44) vorstehenden Steckstutzen (54) für einen den zugehörigen Abschnitt des Förderkanales (4) bildenden flexiblen Saugschlauch (48) übergeht.

10. Absaugvorrichtung nach einem der Ansprüche 7 bis 9, dadurch gekennzeichnet, daß die Abscheidekammer (39) an einer seitlichen Gehäusewand (45) und/oder mindestens einer der Einlaß- bzw. Auslaßöffnungen (46, 47) gegenüberliegend, eine Gehäusetüre (58) aufweist, die in Schließstellung bevorzugt eine annähernd die gesamte zugehörige Gehäusewand (45) einnehmende Türöffnung (59) abgedichtet verschließt und/oder in Offenstellung eine Entnahmeöffnung für die Fremdbestandteile bzw. die Sammeleinrichtung (55) freigibt und daß vorzugsweise mindestens eine Gehäusewand der Abscheidekammer (39), insbesondere die vordere Gehäusewand (40), im wesentlichen über ihre gesamte Erstreckung als Sichtfenster (60) ausgebildet ist, beispielsweise aus durchsichtigem Kunststoff besteht.

11. Absaugvorrichtung nach einem der Ansprüche 8 bis 10, dadurch gekennzeichnet, daß die Sammeleinrichtung (55) mindestens ein von einer Innenseite schräg nach unten in den Auffangbereich geneigtes Leitglied (57) für die Fremdbestandteile, vorzugsweise zwei von einander gegenüberliegenden Innenseiten unmittelbar oberhalb der Sammelwanne abstehende und über die gesamte Breite der zugehörigen Gehäusewände (40, 41) reichende Leitbleche aufweist, die vorzugsweise als obere Führungen für die Schublade (56) ausgebildet sind.

12. Absaugvorrichtung nach einem der vorhergehenden Ansprüche, dadurch gekennzeichnet, daß sie bzw. die Abscheidekammer (39) als tragbares Standgerät o.dgl., insbesondere nach Art eines Abscheidekoffers mit mindestens einem Traggriff (63) an der Oberseite ausgebildet ist.

**Claims**

1. Suction apparatus with a stand (2) and a delivery channel (4) connected downstream of a delivery blower (5) and whose end associated with the filling opening of a storage container (30) directly forms an outlet port (26) issuing into the storage container (30) and with at least one air vent (28) leading into the open for forming an air outlet (33) for the otherwise, substantially air-tight storage container (30), with which is associated a dust filter (34), characterized in that the suction apparatus is constructed for the suction removal of pack filling material, that the outlet port (26) is formed within a lid-like connection mounting (3) for fixing the bag rim of a storage container formed by a flexible collecting bag and that the air vent is provided in the connection mounting (3) within the area surrounded by the bag rim.

2. Suction apparatus according to claim 1, characterized in that the upwardly directed air outlet (33) is provided on one face of the connection mounting (3) as at least one opening in an end wall (24) of the lid-like connection mounting (3), that the air outlet (33) and/or the dust filter (34) is provided substantially in one plane, particularly in a plane roughly at right angles to the central axis (14) of the connection mounting (3) and that the dust filter (34) is located substantially within the connection mounting (3) and more particularly immediately adjacent to the inside of the end wall (24).

3. Suction apparatus according to claims 1 or 2, characterized in that the air outlet (33) at least partly surrounds the outlet port (26) roughly located in the central axis (14) of the connection mounting (3) and in particular there are several air vents (28) in a ring round the outlet port (26), that preferably the air vent (28) is set back in the outlet direction with respect to the outlet port (26), particularly at least by the thickness of the dust filter (34) and the outlet direction is opposite to the venting direction, that preferably the outlet port (26) is formed by the free end of a blow-out connection (25) located on the inside of the connection mounting (3) and is in particular set back with respect to the free edge of a turn-over jacket (23) of the connection mounting (3) provided for engagement in the storage container (30), that preferably the total cross-section of the air vent or vents (28) is much larger than the cross-section of the outlet port (26) or the cross-section of the individual air vent (28) is roughly half as large as that of the outlet port (26) and/or preferably the outlet port (26) is directed downwards and the connection mounting (3) is constructed for connection to the storage container (30) having its filling opening at the top and preferably with the turn-over rim (23) projecting over the underside of the end wall (24) within the outer circumference is associated a locking member, such as a tension band (32), for the edge of the air-impermeable storage container (30).

4. Suction apparatus according to one of the preceding claims, characterized in that a circular boundary projects over the outer circumference of the connection mounting (30) and is preferably formed by the edge (31) of the end wall (24) located on the associated end of the connection mounting (3), there preferably being a single dust filter (34), particularly in the form of a non-woven mat, for all the air vents and preferably it is interchangeably placed in the connection mounting (3) in circular manner between the blowout connection (25) and the turn-over rim (23), that preferably the connection mounting (3) and/or dust filter (34) has a circular construction and/or that the air vent (28), particularly on the inside of the end wall (24), is crossed by a stop for the dust filter (34) and preferably stop bars (29) are radially placed around the outlet port (26).

5. Suction apparatus according to one of the preceding claims, characterized in that on the stand (2), particularly in the bottom area, the delivery blower (5) is arranged preferably with a tangential outlet (8) and/or with an axial inlet (15), that preferably the delivery blower (5) has a drive motor (17) in the form of a three-phase motor, which is in particular provided with a capacitor (18) and/or that preferably the drive motor (17) is externally flanged to the delivery blower (5) and, like the latter, is arranged with a horizontal central axis roughly tangential to the connection mounting (3) in plan view.

6. Suction apparatus according to one of the preceding claims, characterized in that the connection mounting (3) is vertically adjustably and/or removably held by means of a telescopic column (9) of the stand (2) and is located above a base (6) of the stand (2), that preferably the delivery blower (5) is arranged on the fixed bottom of the stand (2), particularly with its side associated with the outlet (8) on the lower column part (12) of the telescopic column (9) and by means of a flexible or length-extendable hose (22) is connected to a tube bend (19, 20) of the delivery channel (4) carrying the connection mounting (3) and/or that the stand (2) is constructed as a chassis and in particular on the frame-like base (6) has self-steering runners (7).

7. Suction apparatus according to one of the preceding claims, characterized in that with it is associated a delivery channel (48, 49) connected by one end to a suction source and by the other end having a suction opening (51) for the filling material and that a separating chamber (39) for extraneous components conveyed with the filling material can be connected to the delivery channel (4).

8. Suction apparatus according to claim 7, characterized in that the separating chamber (39) is constructed as a whirling chamber for the filling material and in particular in the bottom area has a collecting means (55) for the extraneous material, which is e.g. formed by a collecting trough, that preferably the separating chamber (39) is constructed as a cross-sectionally widened intermediate portion of the delivery channel (48, 49) and is provided with connections for the easily detachable connection to at least one connecting portion of the delivery channel (48, 49), that preferably the separating chamber (39) has an inlet port (46) for the filling material sucked in by means of the suction opening (51) and an outlet port (47) for the separated filling material and which is in particular higher than the inlet port (46) and/or is horizontally displaced with respect thereto, that preferably the separating chamber (39) has a substantially rectangular construction and is in particular formed by a sheet metal casing and/or that the collecting means (55) in the filled state can be moved out of the separating chamber (39) and is in particular substantially formed by a flat tray-like drawer (56), which preferably takes up the entire bottom of the separating chamber (39).

9. Suction apparatus according to claim 7 or 8, characterized in that the inlet port (46) of the separating chamber (39) is provided roughly in its lowest area, particularly extending approximately to the level of a base of the collecting means (55) and/or located adjacent to a front casing wall (40) of the separating chamber (39), that preferably the outlet port (47) of the separating chamber (39) is provided approximately in its highest area, particularly with an internal spacing roughly corresponding to its width from an upper casing wall (42) of the separating chamber (39) and/or adjacent to a rear casing wall (41) of the separating chamber (39), that preferably at least one of the openings formed by the inlet/outlet port (46, 47) is provided in one of the lateral casing walls (44) of the separating chamber (39) and said wall (44) in particular has a smaller surface than the front, rear, lower and/or upper casing wall of the separating chamber (39), that preferably the inlet port (46) and outlet port (47) are located in the same wall (44) of the chamber (39) and that the inlet port (46) formed by the end of a pipe connection (52) is displaced inwards relative to the outlet port (47) or the associated casing wall (44) in the separating chamber (39) and/or the outlet port (47) is displaced outwards with a narrowest cross-section with respect to the associated casing wall (44), that preferably the inlet port (46) of the separating chamber (39) is displaced inwards by its internal width into the separating chamber (39) and/or the outlet port (47) is displaced outwards by less than its internal width and the outlet port (47) is in particular located in a depression (53) on the inside of the associated casing wall (44) whose circumferential boundary surrounds in spaced manner the port (47) and/or that the inlet/outlet ports (46, 47) of the separating chamber (39) have roughly the same width or cross-section and in particular at least one of these ports passes into a plug-in connection (54) projecting over the outside of the associated casing wall (44) for a flexible suction hose (48) forming the associated portion of the delivery channel (4).

10. Suction apparatus according to one of the claims 7 to 9, characterized in that the separating chamber (39) has a casing door (58) on one lateral casing wall (45) and facing at least one of the inlet/outlet ports (46, 47) and which in its closed position sealingly closes a door opening (59) taking up roughly the entire associated casing wall (45) and/or in the open position frees a removal opening for the extraneous components or collecting means (55) and that preferably at least one casing wall of the separating chamber (39), particularly the front casing wall (40), is constructed over its entire extension as an inspection window (60), e.g. from transparent plastic.

11. Suction apparatus according to one of the claims 8 to 10, characterized in that the collecting means (55) has a guide member (57) sloping downwards from its inside into the collecting area for the extraneous components and preferably two guide plates projecting immediately above the collecting trough from facing insides and extending over the entire width of the associated casing walls (40, 41) and which are preferably constructed as upper guides for the drawer (56).

**12.** Suction apparatus according to one of the preceding claims, characterized in that it or the separating chamber (39) is constructed as a portable unit, particularly in the manner of a separating case with at least one handle (63) on the top.

## Revendications

**1.** Dispositif d'aspiration comportant un montant (2) et un conduit d'extraction (4) venant à la suite d'un ventilateur extracteur (5), conduit dont une extrémité associée à l'orifice de chargement d'un réservoir (30) forme un orifice de sortie (26) débouchant immédiatement dans le réservoir (30), et au moins un orifice d'échappement d'air (28) auquel est adjoint un filtre à poussières (34) et conduisant à l'air libre pour former une sortie d'air (33) pour le réservoir (30) sensiblement étanche à l'air pour le reste, dispositif d'aspiration caractérisé en ce qu'il est adapté à l'aspiration de matières de rembourrage pour l'emballage, en ce que l'orifice de sortie (26) est pratiqué dans un support de raccordement (3) en-forme de couvercle pour fixer le bord du sac d'un réservoir formé par un sac de collecte et en ce que l'orifice d'échappement d'air est prévu dans le support de raccordement (3), dans la zone entourée par le bord du sac.

**2.** Dispositif d'aspiration suivant la revendication 1, caractérisé en ce que la sortie d'air (33) dirigée vers le haut est prévue sur un côté frontal du support de raccordement (3) sous forme d'au moins une lumière dans une paroi frontale (24) dudit support de raccordement (3) en forme de couvercle, en ce que la sortie d'air (33) et/ou le filtre à poussières (34) est prévue autant dire dans un plan, en particulier dans un plan autant dire perpendiculaire à l'axe central (14) du support de raccordement (3), et en ce que le filtre à poussières (34) se trouve pour l'essentiel à l'intérieur du support de raccordement (3), en particulier à proximité immédiate de la face intérieure de la paroi frontale (24).

**3.** Dispositif d'aspiration suivant la revendication 1 ou 2, caractérisé en ce que la sortie d'air (33) entoure au moins partiellement l'orifice de sortie (26) situé plus ou moins dans l'axe central (14) du support de raccordement (3) et en ce qu'en particulier plusieurs orifices d'échappement d'air (28) sont prévus dans une couronne entourant l'orifice de sortie en ce que de préférence l'orifice d'échappement d'air (28) est décalé vers l'arrière par rapport à l'orifice de sortie (26), en particulier au moins d'une valeur plus ou moins égale à l'épaisseur du filtre à poussières dans le sens de la sortie et en ce que le sens de sortie est opposé à celui de l'échappement d'air, en ce que de préférence l'orifice de sortie (26) est formé par l'extrémité libre d'une tubulure de soufflage (25) en appui sur la face intérieure du support de raccordement (3) et est décalé vers l'arrière en particulier par rapport au bord libre d'un manchon (23) du support de raccordement (3) prévu pour l'emboîtement dans le réservoir (30), en ce que de préférence toute la section transversale de l'orifice d'échappement d'air (28) ou des orifices d'échappement d'air (28) est plusieurs fois plus grande que la section de l'orifice de sortie (26) ou la section transversale de chaque orifice d'échappement d'air (28) est environ de moitié plus grande que celle de l'orifice de sortie (26) et/ou en ce que de préférence l'orifice de sortie (26) est dirigé vers le bas et le support de raccordement (3) est adapté en particulier pour être raccordé au réservoir (30) comportant un orifice de remplissage situé en haut, un organe de serrage du bord du réservoir (30) étanche à l'air, tel qu'une bande de tension (32), étant adjoint de préférence au bord d'emboîtement (23) en saillie sur la face inférieure de la paroi frontale (24).

**4.** Dispositif d'aspiration suivant l'une quelconque des revendications précédentes, caractérisé en ce qu'une butée annulaire formée de préférence par le bord (31) de la paroi frontale (24) située sur l'extrémité correspondante du support de raccordement (3) est en saillie sur la surface extérieure du support de raccordement (3), de préférence un seul filtre à poussières (34), en particulier en forme de natte de nontissé, est prévu pour tous les orifices d'échappement d'air (28) et agencé de préférence sous forme d'anneau entre la tubulure de soufflage (25) et le bord d'emboîtement (23) dans le support de raccordement (3) de manière à pouvoir être remplacé, en ce que de préférence le support de raccordement (3) et/ou le filtre à poussières (34) a une forme circulaire et/ou en ce qu'un certain orifice d'échappement d'air (28), en particulier sur la face intérieure de la paroi frontale (24) est traversé par une butée pour le filtre à poussières (34), des tiges de butée (29) formant de préférence une structure étoilée autour de l'orifice de sortie (26).

**5.** Dispositif d'aspiration suivant l'une quelconque des revendications précédentes, caractérisé en ce que sur le montant (2), en particulier en partie basse, le ventilateur extracteur (5), de préférence à échappement tangentiel (8) et/ou à admission axiale (15), a un moteur d'entraînement (17) en forme de moteur triphasé équipé en particulier d'un condensateur (18) et/ou en ce que de préférence le moteur d'entraînement (17) est flasqué extérieurement sur le ventilateur extracteur (5) et est disposé comme le ventilateur extracteur (5) avec un axe central horizontal et, en vue de dessus, plus ou moins tangentiel par rapport au support de raccordement (3).

6. Dispositif d'aspiration suivant l'une quelconque des revendications précédentes, caractérisé en ce que le support de raccordement (3) est réglable en hauteur et/ou amovible, de préférence par l'intermédiaire d'une colonne télescopique (9) du montant (2) et est placé au-dessus d'un piétement (6) du montant (2), en ce que de préférence le ventilateur extracteur (5) est agencé sur la partie inférieure fixe du montant (2), en particulier avec son côté correspondant à l'échappement (8) en partie basse (12) de la colonne télescopique (9) et est relié par un tuyau (22) flexible voire extensible en longueur à un tube coudé (19, 20) du conduit d'extraction (4) portant le support de raccordement (3) et/ou en ce que le montant (2) est réalisé sous forme de châssis mobile et présente des roulettes auto-directrices (7) en particulier sur le piétement (6) formant cadre.

7. Dispositif d'aspiration suivant l'une quelconque des revendications précédentes, caractérisé en ce qu'il lui est adjoint un conduit d'extraction (48, 49) avec une extrémité à connecter à une source d'aspiration et une extrémité formant un orifice d'aspiration (51) pour les matières à charger et en ce qu'une enceinte de séparation (30) des corps étrangers transportés avec les matières chargées peut être raccordée au conduit d'extraction (4).

8. Dispositif d'aspiration suivant la revendication 7, caractérisé en ce que l'enceinte de séparation (39) est réalisée sous forme d'enceinte à tourbillons pour les matières chargées et présente en particulier en son fond un dispositif d'interception et de collecte (55) pour les corps étrangers, matérialisé par exemple par une cuvette collectrice, en ce que de préférence l'enceinte de séparation (39) est réalisée en tant que portion intermédiaire élargie du conduit d'extraction (48, 49) et pourvue de connexions pour une liaison facilement amovible avec au moins un tronçon suivant du conduit d'extraction (48, 49), en ce que de préférence l'enceinte de séparation (39) présente un orifice d'admission (46) pour les matières chargées aspirées par l'orifice d'aspiration (51), et un orifice d'évacuation (47) pour les matières chargées séparées, qui est en particulier situé plus haut que l'orifice d'admission (46) et/ou décalé à l'horizontale par rapport à ce dernier, en ce que de préférence l'enceinte de séparation (39) a une forme sensiblement rectangulaire, en particulier de boîte en tôle, et/ou en ce que le dispositif de collecte (55) peut être extrait à l'état rempli de l'enceinte de séparation (39) et est formé dans ses grandes lignes par un tiroir (56) à cuvette plate qui occupe de préférence pratiquement tout l'espace du fond de l'enceinte de séparation (39).

9. Dispositif d'aspiration suivant la revendication 7 ou 8, caractérisé en ce que l'orifice d'admission (46) de l'enceinte de séparation (39) est prévu à peu près dans sa partie la plus basse, s'étendant en particulier environ jusqu'à hauteur d'un fond du dispositif collecteur (55) et/ou au voisinage d'un pan avant (40) de l'enceinte de séparation (39), en ce que de préférence l'orifice d'évacuation (47) de l'enceinte de séparation (39) est prévu à peu près dans sa partie la plus haute, en particulier avec un léger espacement correspondant environ à sa largeur par rapport à un pan supérieur (42) de l'enceinte de séparation (39) et/ou à proximité d'un pan arrière (41) de l'enceinte de séparation (39), en ce que de préférence au moins un des orifices constitués par les orifices d'admission et d'évacuation (46, 47) est prévu dans l'un des pans latéraux (44) de l'enceinte de séparation (39) et en ce que ce pan (44) a en particulier une plus petite surface que le pan avant, arrière, inférieur et/ou supérieur de l'enceinte de séparation (39), en ce que de préférence l'orifice d'admission (46) et l'orifice d'évacuation (47) sont prévus dans le même pan (44) de l'enceinte de séparation (39) et en ce que l'orifice d'admission (46) formé en particulier par l'extrémité d'un raccord de tubulure (52) est décalé vers l'intérieur dans l'enceinte de séparation (39) par rapport à l'orifice d'évacuation (47) voire par rapport au pan (44) associé, et/ou en ce que l'orifice d'évacuation (47) est décalé vers l'extérieur par rapport au pan (44) associé avec une section transversale très étroite, en ce que de préférence l'orifice d'admission (46) de l'enceinte de séparation (39) est décalé vers l'intérieur d'une valeur à peu près égale à sa cote de passage dans l'enceinte de séparation (39) et/ou en ce que l'orifice d'évacuation (47) est décalé vers l'extérieur d'une valeur inférieure à sa cote de passage et en ce que l'orifice d'évacuation (47) est situé en particulier dans un creux (53) prévu dans la face intérieure du pan (44) associé, creux dont la délimitation périphérique entoure à distance l'orifice d'évacuation (47) et/ou en ce que les orifices d'admission et d'évacuation (46, 47) de l'enceinte de séparation (39) ont à peu près la même largeur ou section transversale et en ce qu'en particulier l'un de ces orifices se transforme en un raccord à enfichage (54) en saillie sur la face extérieure du pan (44) associé et prévu pour un tuyau d'aspiration (48) flexible formant le tronçon associé du conduit d'extraction (4).

10. Dispositif d'aspiration suivant l'une quelconque des revendications 7 à 9, caractérisé en ce que l'enceinte de séparation (39) présente sur un pan latéral (45) et/ou à l'opposé d'au moins l'un des orifices d'admission et d'évacuation (46, 47), une porte (58) qui, en position de fermeture, ferme de manière hermétique de préférence une ouverture de porte (59) occupant approximativement tout le pan (45) correspondant et/ou qui dégage, en position d'ouverture, un orifice d'évacuation des corps étrangers ou le dispositif de collecte (55), et en ce que de préférence au moins un pan de l'enceinte de séparation (39), en particulier le pan avant (40) est réalisé sous forme de fenêtre de visite (60) sur pratiquement toute son étendue et est fabriqué par exemple en plastique transparent.

11. Dispositif d'aspiration suivant l'une quelconque des revendications 8 à 10, caractérisé en ce que le dispositif de collecte (55) présente au moins un organe de guidage (57) des corps étrangers incliné en oblique vers le bas dans la zone de collecte depuis une face intérieure, de préférence deux tôles de guidage en saillie immédiatement au-dessus de la cuvette collectrice sur deux faces intérieures opposées et s'étendant sur toute la largeur des pans (40, 41) associés, qui sont conçues de préférence en tant que glissières supérieures pour le tiroir (56).

12. Dispositif d'aspiration suivant l'une quelconque des revendications précédentes, caractérisé en ce qu'il est réalisé, ou l'enceinte de séparation (39) est réalisée sous forme d'appareil sur pied portable ou similaire, en particulier sous forme d'un coffre de séparation comportant au moins une poignée de transport (63) sur sa face supérieure.

Fig.1

Fig.2

16

**Fig. 3**

**Fig. 4**

Fig.5

18

Fig.6